(19) Europäisches Patentamt / European Patent Office / Office européen des brevets

(11) **EP 2 041 614 B1**

(12) **FASCICULE DE BREVET EUROPEEN**

(45) Date de publication et mention de la délivrance du brevet:
**21.06.2017 Bulletin 2017/25**

(21) Numéro de dépôt: **07823546.2**

(22) Date de dépôt: **04.07.2007**

(51) Int Cl.:
*G02C 7/02* *(2006.01)*　　　*G02C 7/08* *(2006.01)*
*G02B 27/01* *(2006.01)*

(86) Numéro de dépôt international:
**PCT/FR2007/051590**

(87) Numéro de publication internationale:
**WO 2008/003903 (10.01.2008 Gazette 2008/02)**

(54) **LENTILLE OPHTALMIQUE A INSERT OPTIQUE INTEGRE DESTINE A PERMETTRE LA PROJECTION D'INFORMATIONS**

OPHTHALMISCHE LINSE MIT INTEGRIERTEM OPTISCHEN EINSATZ ZUR PROJIZIERUNG VON INFORMATION

OPHTHALMIC LENS WITH INTEGRATED OPTICAL INSERT INTENDED FOR PROJECTING INFORMATION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.07.2006 FR 0652840**

(43) Date de publication de la demande:
**01.04.2009 Bulletin 2009/14**

(73) Titulaire: **ESSILOR INTERNATIONAL (Compagnie Générale d'Optique)**
**94227 Charenton-le-Pont (FR)**

(72) Inventeurs:
• **MOLITON, Renaud (FR)**
• **ROUSSEAU, Benjamin F-94227 Charenton Le Pont (FR)**

(74) Mandataire: **Peguet, Wilfried et al**
**Ipsilon**
**Le Centralis**
**63, avenue du Général Leclerc**
**92340 Bourg-la-Reine (FR)**

(56) Documents cités:
| | |
|---|---|
| WO-A-01/95027 | WO-A1-01/06298 |
| FR-A- 2 698 454 | FR-A- 2 872 589 |
| FR-A- 2 873 212 | GB-A- 2 123 974 |
| GB-A- 2 134 759 | |

**Description**

La présente invention concerne une lentille ophtalmique, plus particulièrement une lentille ophtalmique unifocale, dans laquelle est intégré un insert optique, ledit insert optique étant destiné à permettre la projection d'informations, de type images ou multimédia.

Elle s'applique typiquement, mais non exclusivement, aux systèmes optiques pouvant être positionné dans une monture de lunettes.

Le document FR-2 873 212 propose un procédé de fabrication d'une lentille de correction de la vue intégrant totalement un insert optique transparent.

La lentille de correction de la vue comporte une face avant et une face arrière et dans cette lentille des faisceaux optiques, émis d'un élément optique d'un système de génération de faisceaux optiques, sont introduits par une surface d'entrée et dirigés vers l'oeil du porteur pour permettre la visualisation d'une image informative.

Les faisceaux optiques sont réfléchis entre les deux faces de réflexion de l'insert optique transparent, l'insert étant constitué d'un guide de lumière.

La correction de l'image informative est réalisée en ajustant la mise au point de l'image sur le système générateur de faisceaux optiques, lorsque la géométrie de l'insert optique le permet.

En effet, comme la voie optique informative ne passe pas à travers la face avant du verre de lunette, la correction optique disponible sur la voie de l'image informative est seulement égale à la puissance de la face arrière. La correction optique disponible sur la voie de l'image informative ne correspond donc pas à la correction visuelle prescrite au porteur. Le déficit de correction est compensé au moyen d'un changement de mise au point du système générateur.

Le document FR-2 872 586 décrit plus en détail ce type d'afficheur ophtalmique permettant d'ajuster l'image informative en effectuant la mise au point sur le système générateur de faisceaux optiques.

L'afficheur ophtalmique est équipé d'un dispositif de réglage de la focalisation par réglage de la longueur des faisceaux optiques.

Les faisceaux optiques sont émis à l'aide d'un écran miniature disposé dans un boîtier, situé à l'arrière de la face arrière de la lentille.

Le dispositif de réglage comporte une platine fixe supportant une lentille miniature. La platine fixe est également reliée à l'écran miniature par une connexion mobile réglable.

Cependant, le boîtier de ce type de dispositif, comprenant le système de réglage, est encombrant et entraîne une gêne au niveau du porteur de l'afficheur ophtalmique.

De plus, la mécanique de fonctionnement de ce type de dispositif est fragile, notamment la connexion mobile permettant à l'écran miniature d'être mobile.

Ce type de réglage nécessite de la minutie et de la délicatesse quand cette mécanique est miniaturisée pour des raisons d'encombrement.

D'autres dispositifs optiques tels que les systèmes optiques de superposition d'une image informative sur l'image de l'environnement, décrits par exemple dans le document FR-2 698 454, sont également bien connus de l'homme du métier. Cependant, ils ne permettent pas de corriger la vue d'un porteur amétrope.

L'invention vise à résoudre les problèmes de l'art antérieur en proposant une lentille ophtalmique, dans laquelle est intégré un insert optique pour la visualisation d'une image informative, ladite lentille présentant une correction ophtalmique optimisée autant sur l'image informative que sur l'image de l'environnement, vues par un porteur amétrope.

A cet effet, l'invention a pour objet une lentille de correction de la vue comportant une face avant et une face arrière et dans laquelle des faisceaux optiques, émis d'un système de génération de faisceaux optiques, sont introduits par une surface d'entrée et dirigés vers l'oeil d'un porteur amétrope de ladite lentille pour permettre la visualisation d'un contenu informationnel, un insert optique étant inclus dans la lentille, ladite lentille étant agencée afin de permettre au porteur de ladite lentille d'avoir un effort accomodatif inférieur ou égal à 2D lors de la visualisation du contenu informationnel.

Dans la présente invention, l'abréviation « D » signifie « dioptrie ».

Grâce à l'invention, la fonction essentielle de correction de la vision informative, ainsi que la fonction essentielle de correction de la vue est assurée par un agencement particulier de la lentille permettant au porteur amétrope d'avoir une vision nette et confortable dans les deux fonctions.

De façon surprenante, la Demanderesse a découvert que le fait d'avoir un effort accomodatif inférieur ou égal à 2D permet à tout individu amétrope âgé environ de moins de 50 ans, de préférence de moins de 45 ans, de ne pas se fatiguer lorsqu'il visualise l'image informative.

Le porteur amétrope a ainsi une correspondance optimisée de la correction entre les voies ophtalmique et informative.

De plus, la présente invention peut également être utilisée avec tout type de systèmes de génération de faisceaux optiques, notamment les systèmes de génération de faisceaux optiques ne disposant pas d'un réglage de la focalisation permettant d'ajuster la distance de visualisation de l'image informative.

Enfin, la présente invention peut également être utilisée avec tout type d'inserts optiques, notamment les inserts optiques de géométrie ne permettant leur utilisation qu'avec des systèmes de générations de faisceaux optiques présentant une focalisation spécifique ajustée à ladite géométrie.

De préférence, la lentille de correction de la vue permet de visualiser simultanément l'image informative et l'environnement, l'environnement étant superposé à l'image informative.

Dans un mode de réalisation, la lentille, destinée à un porteur myope, est agencée de sorte que la puissance de la face avant de la lentille est comprise entre 0D et +3D, le complément de la puissance nécessaire de la lentille pour corriger la vision dudit porteur étant sur la face arrière de la lentille

Dans un exemple particulier, la puissance de la face avant de la lentille est égale à +1 D.

Dans un autre mode de réalisation, la lentille, destinée à un porteur hypermétrope, est agencée de sorte que la puissance de la face arrière de la lentille est comprise entre -1,25D et 0D, le complément de la puissance nécessaire de la lentille pour corriger la vision dudit porteur étant sur la face avant de la lentille

Dans un exemple particulier, la puissance de la face arrière de la lentille est égale à -0,25D.

Dans un autre mode de réalisation, la lentille comprend au moins un élément de correction, situé entre l'insert optique et l'oeil du porteur.

Selon un exemple particulier, l'élément de correction comprend un élément augmentant la profondeur de champ.

De préférence, la lentille comprend :

- un premier élément de correction, situé entre l'insert optique et l'oeil du porteur, et
- un deuxième élément de correction, situé entre l'insert optique et le contenu informationnel,

la puissance dudit deuxième élément de correction étant égale à l'opposé de la puissance dudit premier élément de correction.

Selon une variante, au moins un des éléments de correction comprend une pastille.

Selon un aspect de l'invention, au moins une pastille est de type diffractif.

Selon un autre aspect de l'invention, au moins une pastille est de type GRIN.

Selon une caractéristique de l'invention, au moins une pastille est disposée sur au moins l'une des deux faces de la lentille.

Dans un exemple particulier, une première pastille et une deuxième pastille sont disposées respectivement sur la face arrière et la face avant de la lentille, la puissance de ladite deuxième pastille étant égale à l'opposé de la puissance de ladite première pastille.

Selon une autre caractéristique de l'invention, au moins une pastille est disposée au moins partiellement sur au moins l'une des faces planes et parallèles de l'insert optique.

Dans un exemple particulier, une première pastille et une deuxième pastille sont disposées au moins partiellement respectivement sur la face de l'insert optique directement à proximité de la face arrière de la lentille et sur la face de l'insert optique directement à proximité de la face avant de la lentille, la puissance de ladite deuxième pastille étant égale à l'opposé de la puissance de ladite première pastille.

Selon une autre variante, au moins un des éléments de correction comprend un usinage sur au moins l'une des deux faces de la lentille.

Dans un exemple particulier, un premier usinage et un deuxième usinage sont réalisés respectivement sur la face arrière et la face avant de la lentille, la puissance dudit deuxième usinage étant égale à l'opposé de la puissance dudit premier usinage.

Dans une réalisation particulièrement avantageuse, les éléments constitutifs dudit système de générateur de faisceaux optiques sont relativement sensiblement fixes.

Ce type de système de générateur de faisceaux optiques permet de garantir un encombrement minimaliste et un système non gênant pour le porteur amétrope.

De plus, le système de générateur de faisceaux optiques est simple à fabriquer et est peu coûteux.

D'autres caractéristiques et avantages de la présente invention apparaîtront à la lumière des exemples qui vont suivre en référence aux dessins annotés, lesdits exemples et dessins étant donnés à titre illustratif et nullement limitatif.

La figure 1 est une vue en coupe d'une lentille dans laquelle est inclus un insert optique, selon l'art antérieur.

La figure 2 est une vue en coupe d'une lentille dans laquelle est inclus un insert optique, la lentille étant agencée selon une variante de réalisation conformément à l'invention.

La figure 3 est une vue en coupe d'une lentille dans laquelle est inclus un insert optique, la lentille étant agencée selon une autre variante de réalisation conformément à l'invention.

La figure 4 est une vue en coupe d'une lentille dans laquelle est inclus un insert optique, la lentille étant agencée selon une autre variante de réalisation conformément à l'invention.

La figure 5 est une vue en coupe d'une lentille dans laquelle est inclus un insert optique, la lentille étant agencée selon une autre variante de réalisation conformément à l'invention.

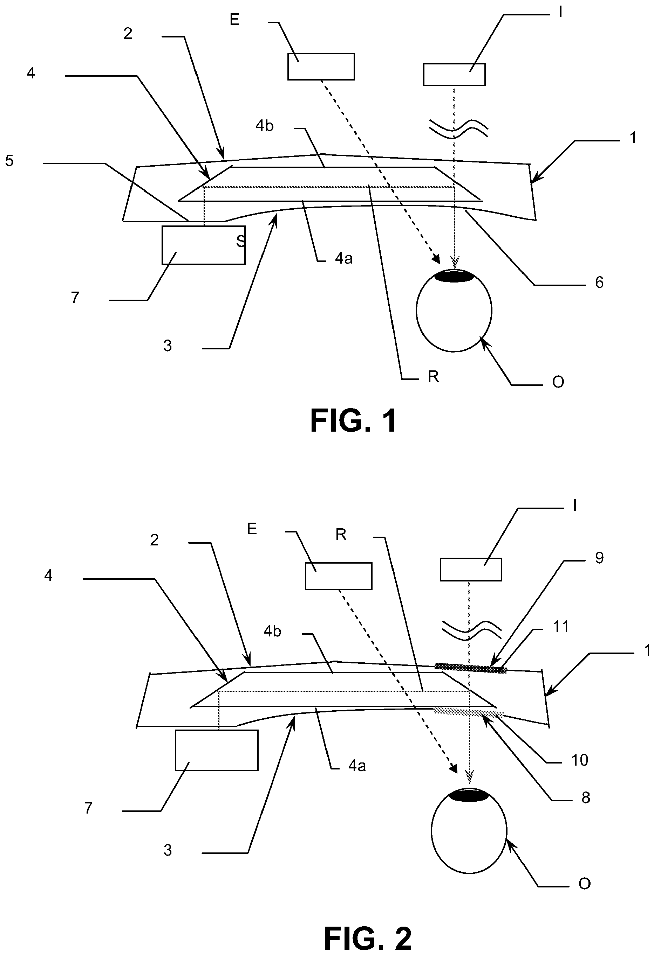

Sur la figure 1 est représentée une lentille 1 unifocale de correction de la vue comportant une face avant 2 et une face arrière 3, la face arrière 3 étant située directement à proximité de l'oeil O du porteur amétrope.

Les faces avant 2 et arrière 3 de la lentille sont réaliseés, de façon bien connue de l'homme du métier, par exemple par usinage et polissage ou bien par moulage, de manière à obtenir la correction de la vue souhaitée pour le porteur amétrope.

La lentille 1 comprend un insert optique 4 constitué d'un matériau transparent, du verre minéral ou une matière plastique, d'indice optique sensiblement égal à celui du matériau constitutif de la lentille 1 sur l'ensemble du spectre visible.

Ainsi sont éliminés les effets prismatiques indésirables et est minimisée la visibilité de l'insert optique 4.

Sur le plan esthétique, la présence de l'insert optique 4 dans la lentille 1 n'est ainsi pas visible ou pratiquement pas visible.

L'insert optique 4 comprend deux faces 4a,4b planes et parallèles, la face 4a étant directement à proximité de la face arrière 3 de la lentille et la face 4b étant directement à proximité de la face avant 2 de la lentille.

Des faisceaux optiques, schématisés par le trajet du rayon principal R, émis d'un système 7 de générations de faisceaux optiques, sont introduits par une surface d'entrée 5 de la lentille 1.

Cette surface d'entrée 5 et le trajet du rayon principal R sont sensiblement perpendiculaires.

Par l'intermédiaire de l'insert optique 4, le rayon principal R est dirigé vers l'oeil O du porteur amétrope pour permettre la visualisation d'informations I de type images ou multimédia.

Pour ce faire, le rayon principal R peut être réfléchi une pluralité de fois (non représenté) entre les deux faces 4a,4b de l'insert optique 4 dites de réflexion entre la surface d'entrée 5 et la zone de sortie 6 de la lentille comme décrit dans le document de brevet FR-2 873 212 ou dans le document de brevet WO-01/95027.

Le système 7 de génération de faisceaux est un système permettant ou non la correction de l'image informative I en ajustant la mise au point de l'image avec ledit système 7.

De préférence, il sera utilisé un système de génération 7 de faisceaux optiques n'étant constitué que d'éléments sensiblement fixes, notamment ne disposant pas d'un réglage de la focalisation permettant d'ajuster la distance de visualisation de l'image informative I, d'encombrement limité.

Dans le cas d'une lentille 1 unifocale, la puissance de la lentille, plus précisément du verre de lunette, correspond à la correction du porteur amétrope pour visualiser l'environnement E et est égale à la somme de la puissance apportée par la face avant 2 et de la puissance apportée par la face arrière 3 de la lentille.

La puissance de la lentille 1 est indépendante de la direction de regard du porteur, c'est-à-dire de la partie de la lentille à travers laquelle le porteur voit l'environnement E.

Les équations exactes, permettant de calculer la puissance de la lentille, peuvent être obtenues grâce aux formules de Gullstrand bien connues de l'homme du métier.

Les équations qui suivent sont approximatives puisqu'elles ne tiennent pas compte de l'épaisseur de la lentille.

La puissance apportée pour la vision de l'environnement E est donnée par l'équation suivante :

$$P(\text{Vision Environnement E}) = P(\text{Face avant 2}) + P(\text{Face arrière 3})$$

avec

$$P(\text{Face avant 2}) = (n-1)/R_{\text{Face avant 2}}$$

où n est l'indice optique de la lentille et $R_{\text{Face avant 2}}$ est le rayon de courbure de la face avant 2 et,

$$P(\text{Face arrière 3}) = (1-n)/R_{\text{Face arrière 3}}$$

où n est l'indice optique de la lentille et $R_{\text{Face arrière 3}}$ est le rayon de courbure de la face arrière 3.

La voie optique de l'image informative I ne passe pas à travers la face avant 2 de la lentille 1.

Ainsi, la correction optique disponible sur la voie d'imagerie informative I est seulement égale à la puissance de la face arrière 3, soit :

$$P(\text{Vision Informative I}) = P(\text{Face arrière 3})$$

La voie d'imagerie informative I ne correspond donc pas à la correction visuelle prescrite au porteur amétrope puisque la vision informative I ne prend pas en compte la puissance de la face avant 2 de la lentille.

Il convient alors de compenser le déficit de correction au moyen d'un agencement de la lentille 1 permettant au porteur amétrope de ladite lentille d'avoir un effort accomodatif inférieur ou égal à 2D lors de la visualisation du contenu informationnel I.

Dans un mode de réalisation conformément à l'invention, l'agencement de la lentille est réalisé au niveau de la face avant ou de la face arrière de la lentille.

Dans une première variante correspondant au cas d'un porteur myope, la lentille a un rayon de courbure de la face arrière inférieur au rayon de courbure de la face avant de la lentille.

Ainsi, la puissance de la face arrière est supérieure, en valeur absolue, à la puissance de la face avant de la lentille.

La sélection d'une face avant de la lentille de puissance comprise entre 0 et +3D permet au porteur myope de visualiser la voie informative sans fatigue, l'effort accomodatif étant inférieur ou égal à 2D.

En effet, les tableaux 1 à 4, respectivement pour une puissance de la face avant de la lentille égale à +0,25D, +1D, +2D et +3D, montrent que les puissances de lentille sont comprises dans une large gamme de valeurs pouvant atteindre -10D, pour garantir un effort accomodatif inférieur ou égal à 2D.

Tableau 1

| Puissance Face Avant +0,25D | | | | |
|---|---|---|---|---|
| Puissance de la lentille en D | Puissance Face arrière en D | Distance vision confort en m | Position Image informative en m | Effort accommodatif EF0 calculé en D |
| -15,00 | -15,25 | 0,06 | 0,08 | 2,77 |
| -10,00 | -10,25 | 0,09 | 0,11 | 1,70 |
| -6,00 | -6,25 | 0,14 | 0,17 | 1,12 |
| -4,00 | -4,25 | 0,20 | 0,25 | 0,92 |
| -3,75 | -4,00 | 0,21 | 0,26 | 0,90 |
| -3,50 | -3,75 | 0,22 | 0,28 | 0,89 |
| -3,25 | -3,50 | 0,24 | 0,30 | 0,87 |
| -3,00 | -3,25 | 0,25 | 0,32 | 0,85 |
| -2,75 | -3,00 | 0,27 | 0,34 | 0,84 |
| -2,50 | -2,75 | 0,29 | 0,37 | 0,82 |
| -2,25 | -2,50 | 0,31 | 0,41 | 0,81 |
| -2,00 | -2,25 | 0,33 | 0,45 | 0,80 |
| -1,75 | -2,00 | 0,36 | 0,51 | 0,79 |
| -1,50 | -1,75 | 0,40 | 0,58 | 0,78 |
| -1,25 | -1,50 | 0,44 | 0,68 | 0,77 |
| -1,00 | -1,25 | 0,50 | 0,81 | 0,77 |
| -0,75 | -1,00 | 0,57 | 1,01 | 0,76 |
| -0,50 | -0,75 | 0,67 | 1,34 | 0,76 |
| -0,25 | -0,50 | 0,80 | 2,01 | 0,75 |
| 0,00 | | 1,00 | | |

Tableau 2

| Puissance Face Avant +1D | | | | |
|---|---|---|---|---|
| Puissance de la lentille en D | Puissance Face arrière en D | Distance vision confort en m | Position Image informative en m | Effort accommodatif EF0 calculé en D |
| -15,00 | -16,00 | 0,06 | 0,07 | 2,21 |
| -10,00 | -11,00 | 0,09 | 0,10 | 1,09 |
| -6,00 | -7,00 | 0,14 | 0,15 | 0,46 |
| -4,00 | -5,00 | 0,20 | 0,21 | 0,24 |
| -3,75 | -4,75 | 0,21 | 0,22 | 0,22 |
| -3,50 | -4,50 | 0,22 | 0,23 | 0,19 |
| -3,25 | -4,25 | 0,24 | 0,25 | 0,17 |
| -3,00 | -4,00 | 0,25 | 0,26 | 0,15 |
| -2,75 | -3,75 | 0,27 | 0,28 | 0,14 |
| -2,50 | -3,50 | 0,29 | 0,30 | 0,12 |
| -2,25 | -3,25 | 0,31 | 0,32 | 0,10 |
| -2,00 | -3,00 | 0,33 | 0,34 | 0,09 |
| -1,75 | -2,75 | 0,36 | 0,37 | 0,07 |
| -1,50 | -2,50 | 0,40 | 0,41 | 0,06 |
| -1,25 | -2,25 | 0,44 | 0,45 | 0,05 |
| -1,00 | -2,00 | 0,50 | 0,51 | 0,04 |
| -0,75 | -1,75 | 0,57 | 0,58 | 0,03 |
| -0,50 | -1,50 | 0,67 | 0,68 | 0,02 |
| -0,25 | -1,25 | 0,80 | 0,81 | 0,02 |
| 0,00 | | 1,00 | | |

Tableau 3

| Puissance Face Avant +2D | | | | |
|---|---|---|---|---|
| Puissance de la lentille en D | Puissance Face arrière en D | Distance vision confort en m | Position Image informative en m | Effort accommodatif EF0 calculé en D |
| -15,00 | -17,00 | 0,06 | 0,07 | 1,47 |
| -10,00 | -12,00 | 0,09 | 0,09 | 0,29 |
| -8,00 | -10,00 | 0,11 | 0,11 | 0,09 |
| -6,00 | -8,00 | 0,14 | 0,14 | 0,41 |
| -3,75 | -5,75 | 0,21 | 0,18 | 0,69 |
| -3,50 | -5,50 | 0,22 | 0,19 | 0,71 |
| -3,25 | -5,25 | 0,24 | 0,20 | 0,74 |
| -3,00 | -5,00 | 0,25 | 0,21 | 0,76 |
| -2,75 | -4,75 | 0,27 | 0,22 | 0,78 |

(suite)

| Puissance Face Avant +2D | | | | |
|---|---|---|---|---|
| Puissance de la lentille en D | Puissance Face arrière en D | Distance vision confort en m | Position Image informative en m | Effort accommodatif EF0 calculé en D |
| -2,50 | -4,50 | 0,29 | 0,23 | 0,81 |
| -2,25 | -4,25 | 0,31 | 0,25 | 0,83 |
| -2,00 | -4,00 | 0,33 | 0,26 | 0,85 |
| -1,75 | -3,75 | 0,36 | 0,28 | 0,86 |
| -1,50 | -3,50 | 0,40 | 0,30 | 0,88 |
| -1,25 | -3,25 | 0,44 | 0,32 | 0,90 |
| -1,00 | -3,00 | 0,50 | 0,34 | 0,91 |
| -0,75 | -2,75 | 0,57 | 0,37 | 0,93 |
| -0,50 | -2,50 | 0,67 | 0,41 | 0,94 |
| -0,25 | -2,25 | 0,80 | 0,45 | 0,95 |
| 0,00 | | 1,00 | | |

Tableau 4

| Puissance Face Avant +3D | | | | |
|---|---|---|---|---|
| Puissance de la lentille en D | Puissance Face arrière en D | Distance vision confort en m | Position Image informative en m | Effort accommodatif EF0 calculé en D |
| -15 | -18,00 | 0,06 | 0,07 | 0,75 |
| -10 | -13,00 | 0,09 | 0,09 | 0,5 |
| -8 | -11,00 | 0,11 | 0,1 | 0,91 |
| -6 | -9,00 | 0,14 | 0,12 | 1,26 |
| -3,75 | -6,75 | 0,21 | 0,16 | 1,57 |
| -3,5 | -6,50 | 0,22 | 0,16 | 1,6 |
| -3,25 | -6,25 | 0,24 | 0,17 | 1,63 |
| -3 | -6,00 | 0,25 | 0,18 | 1,66 |
| -2,75 | -5,75 | 0,27 | 0,18 | 1,69 |
| -2,5 | -5,50 | 0,29 | 0,19 | 1,71 |
| -2,25 | -5,25 | 0,31 | 0,2 | 1,74 |
| -2 | -5,00 | 0,33 | 0,21 | 1,76 |
| -1,75 | -4,75 | 0,36 | 0,22 | 1,78 |
| -1,5 | -4,50 | 0,4 | 0,23 | 1,81 |
| -1,25 | -4,25 | 0,44 | 0,25 | 1,83 |
| -1 | -4,00 | 0,5 | 0,26 | 1,85 |
| -0,75 | -3,75 | 0,57 | 0,28 | 1,86 |
| -0,5 | -3,50 | 0,67 | 0,3 | 1,88 |
| -0,25 | -3,25 | 0,8 | 0,32 | 1,9 |

(suite)

| Puissance Face Avant +3D | | | | |
|---|---|---|---|---|
| Puissance de la lentille en D | Puissance Face arrière en D | Distance vision confort en m | Position Image informative en m | Effort accommodatif EF0 calculé en D |
| 0 | | 1 | | |

Dans la présente invention, l'effort accomodatif EFO, en valeur absolue, est calculé par la formule suivante :

$$\frac{1}{\text{Distance vision confort}} - \frac{1}{\text{Position image informative}}$$

La distance vision confort est la distance de vision sans effort accomodatif. Pour un emmétrope, cette distance est égale à 1m.

La position image informative est la position de l'image informative I dans l'espace visuel du porteur, une fois que l'image informative I a traversé la face arrière de la lentille.

La vision informative I est ainsi visualisée de manière très confortable par le porteur myope.

De façon particulièrement avantageuse, agencer une face avant de puissance +1D permet de façon surprenante d'obtenir un effort accomodatif beaucoup plus faible qu'avec des faces avants de puissance +3D, 2D ou +0,25D, les puissances de lentille étant comprises dans une large gamme de valeurs pouvant atteindre -10D, selon le tableau 2.

Au contraire, lorsque la puissance de la face avant de la lentille est supérieure à +3D, l'effort accomodatif EF0 calculé n'est pas acceptable pour une large gamme de puissance de lentille.

Par exemple, comme illustré dans le tableau 5, une lentille comportant une puissance de la face avant égale à +4D ne permet pas d'utiliser ladite lentille avec une puissance comprise entre -6D et -0,25D puisque l'effort accomodatif EF0 calculé est supérieur à 2D.

Tableau 5

| Puissance Face Avant +4D | | | | |
|---|---|---|---|---|
| Puissance de la lentille en D | Puissance Face arrière en D | Distance vision confort en m | Position Image informative en m | Effort accommodatif EF0 calculé en D |
| -15,00 | -19,00 | 0,06 | 0,06 | 0,03 |
| -10,00 | -14,00 | 0,09 | 0,08 | 1,28 |
| -8,00 | -12,00 | 0,11 | 0,09 | 1,71 |
| -6,00 | -10,00 | 0,14 | 0,11 | 2,09 |
| -3,75 | -7,75 | 0,21 | 0,14 | 2,44 |
| -3,50 | -7,50 | 0,22 | 0,14 | 2,48 |
| -3,25 | -7,25 | 0,24 | 0,15 | 2,51 |
| -3,00 | -7,00 | 0,25 | 0,15 | 2,54 |
| -2,75 | -6,75 | 0,27 | 0,16 | 2,57 |
| -2,50 | -6,50 | 0,29 | 0,16 | 2,60 |
| -2,25 | -6,25 | 0,31 | 0,17 | 2,63 |
| -2,00 | -6,00 | 0,33 | 0,18 | 2,66 |
| -1,75 | -5,75 | 0,36 | 0,18 | 2,69 |
| -1,50 | -5,50 | 0,40 | 0,19 | 2,71 |
| -1,25 | -5,25 | 0,44 | 0,20 | 2,74 |

(suite)

| Puissance Face Avant +4D | | | | |
|---|---|---|---|---|
| Puissance de la lentille en D | Puissance Face arrière en D | Distance vision confort en m | Position Image informative en m | Effort accommodatif EF0 calculé en D |
| -1,00 | -5,00 | 0,50 | 0,21 | 2,76 |
| -0,75 | -4,75 | 0,57 | 0,22 | 2,78 |
| -0,50 | -4,50 | 0,67 | 0,23 | 2,81 |
| -0,25 | -4,25 | 0,80 | 0,25 | 2,83 |
| 0,00 | | 1,00 | | |

Dans une seconde variante, le même principe peut être appliqué pour un porteur hypermétrope.

Dans ce cas, la lentille a un rayon de courbure de la face avant inférieur au rayon de courbure de la face arrière de la lentille.

Ainsi, la puissance de la face avant est supérieure, en valeur absolue, à la puissance de la face arrière de la lentille.

La sélection d'une face arrière de la lentille de puissance comprise entre 0 et +1,25D permet au porteur myope de visualiser la voie informative I sans fatigue, l'effort accomodatif étant inférieur ou égal à 2D.

Le tableau 6 montre que, pour un effort accomodatif EFO calculé inférieur ou égal à 2D, il est possible d'obtenir une vision confortable pour une puissance de la lentille au maximum égale à +2D, en utilisant une face arrière de puissance -1 D.

Tableau 6

| Puissance Face Arrière -1D | | | | |
|---|---|---|---|---|
| Puissance de la lentille en D | Puissance Face avant en D | Distance vision confort en m | Position Image informative en m | Effort accommodatif EF0 calculé en D |
| 4,00 | 5,00 | -0,33 | 1,02 | 3,98 |
| 3,75 | 4,75 | -0,36 | 1,02 | 3,73 |
| 3,50 | 4,50 | -0,40 | 1,02 | 3,48 |
| 3,25 | 4,25 | -0,44 | 1,02 | 3,23 |
| 3,00 | 4,00 | -0,50 | 1,02 | 2,98 |
| 2,75 | 3,75 | -0,57 | 1,02 | 2,73 |
| 2,50 | 3,50 | -0,67 | 1,02 | 2,48 |
| 2,25 | 3,25 | -0,80 | 1,02 | 2,23 |
| 2,00 | 3,00 | -1,00 | 1,02 | 1,98 |
| 1,75 | 2,75 | -1,33 | 1,02 | 1,73 |
| 1,50 | 2,50 | -2,00 | 1,02 | 1,48 |
| 1,25 | 2,25 | -4,00 | 1,02 | 1,23 |
| 1,00 | 2,00 | infini | 1,02 | 0,98 |
| 0,75 | 1,75 | 4,00 | 1,02 | 0,73 |
| 0,50 | 1,50 | 2,00 | 1,02 | 0,48 |
| 0,25 | 1,25 | 1,33 | 1,02 | 0,23 |
| 0,00 | | 1,00 | | |

Le tableau 7 montre, quant à lui, que pour un effort accomodatif EFO calculé inférieur ou égal à 2D, il est possible d'obtenir une vision confortable pour une puissance de la lentille au maximum égale à +2,75D, en utilisant une face arrière de puissance -0,25D.

Tableau 7

| Puissance Face Arrière -0.25D | | | | |
|---|---|---|---|---|
| Puissance de la lentille en D | Puissance Face avant en D | Distance vision confort en m | Position Image informative en m | Effort accommodatif EF0 calculé en D |
| 4,00 | 4,25 | -0,33 | 4,03 | 3,25 |
| 3,75 | 4,00 | -0,36 | 4,03 | 3,00 |
| 3,50 | 3,75 | -0,40 | 4,03 | 2,75 |
| 3,25 | 3,50 | -0,44 | 4,03 | 2,50 |
| 3,00 | 3,25 | -0,50 | 4,03 | 2,25 |
| 2,75 | 3,00 | -0,57 | 4,03 | 2,00 |
| 2,50 | 2,75 | -0,67 | 4,03 | 1,75 |
| 2,25 | 2,50 | -0,80 | 4,03 | 1,50 |
| 2,00 | 2,25 | -1,00 | 4,03 | 1,25 |
| 1,75 | 2,00 | -1,33 | 4,03 | 1,00 |
| 1,50 | 1,75 | -2,00 | 4,03 | 0,75 |
| 1,25 | 1,50 | -4,00 | 4,03 | 0,50 |
| 1,00 | 1,25 | infini | 4,03 | 0,25 |
| 0,75 | 1,00 | 4,00 | 4,03 | 0,00 |
| 0,50 | 0,75 | 2,00 | 4,03 | -0,25 |
| 0,25 | 0,50 | 1,33 | 4,03 | -0,50 |
| 0,00 | | 1,00 | | |

Les tableaux 8 et 9 présentent une gamme optimisée de lentille, conformément à l'invention, couvrant respectivement une puissance optique de -4D à -0,5D pour le cas du porteur myope et de 0,5D à 3D pour le cas du porteur hypermétrope.

Tableau 8

| Porteur Myope | | | |
|---|---|---|---|
| Puissance Face Avant +1D | | | |
| Puissance de la lentille en D | Rayon Face Avant en mm | Rayon Face Arrière en mm | Epaisseur de la lentille au centre en mm |
| -0,5 | 597,43 | 397,8 | 3,43 |
| -1 | 597,43 | 298,49 | 3,43 |
| -1,5 | 597,43 | 238,86 | 3,43 |
| -2 | 597,43 | 199,09 | 3,43 |
| -2,5 | 597,43 | 170,67 | 3,43 |
| -3 | 597,43 | 149,35 | 3,43 |
| -3,5 | 597,43 | 132,77 | 3,43 |
| -4 | 597,43 | 119,5 | 3,43 |

Tableau 9

| Porteur Hypermétrope | | | |
| --- | --- | --- | --- |
| Puissance Face Arrière -0,25D | | | |
| Puissance de la lentille en D | Rayon Face Arrière en mm | Rayon Face Avant en mm | Epaisseur de la lentille au centre en mm |
| 0.5 | 2389,73 | 798,48 | 3,27 |
| 1 | 2389,73 | 479,29 | 3,59 |
| 1.5 | 2389,73 | 342,42 | 3,91 |
| 2 | 2389,73 | 266,36 | 4,22 |
| 2.5 | 2389,73 | 217,96 | 4,54 |
| 3 | 2389,73 | 184,44 | 4,86 |

Le matériau utilisé pour la lentille est le monomère MR6, d'indice 1,59911 et de longueur d'onde 550 nm.

L'insert optique est du type de l'insert optique décrit dans le brevet WO-01/95027, et a une épaisseur de 2mm.

Les résultats des tableaux 8 et 9 tiennent compte de l'épaisseur réelle de la lentille.

Dans un autre mode de réalisation conformément à l'invention, la lentille comprend au moins un élément de correction, situé entre l'insert optique 4 et l'oeil du porteur O.

De préférence, la lentille 1 comprend un premier élément de correction 8, situé entre l'insert optique 4 et l'oeil O du porteur, et un deuxième élément de correction 9, situé entre l'insert optique 4 et le contenu informationnel I, comme représenté sur les figures 2 à 4, la puissance dudit deuxième élément de correction étant égale à l'opposé de la puissance dudit premier élément de correction.

Le premier élément de correction 8 et le deuxième élément de correction 9 sont réalisés dans le diamètre utile correspondant au champ angulaire de la vision informative I du porteur amétrope.

En d'autres termes, le diamètre utile est la zone traversée par les faisceaux optiques sur la face arrière de la lentille.

Par exemple, un diamètre utile de 17 mm correspond à un insert optique qui transmet en sortie une image de champ angulaire de 23°.

Ces éléments de correction 8, 9 permettent à la voie d'imagerie informative I de correspondre à la correction visuelle prescrite au porteur amétrope, l'effort accomodatif du porteur amétrope étant inférieur ou égal à 2D.

Les équations exactes, permettant de calculer la puissance de la vision informative I, peuvent être obtenues grâce aux formules de Gullstrand bien connues de l'homme du métier.

Les équations qui suivent sont approximatives puisqu'elles ne tiennent pas compte de l'épaisseur de la lentille.

La correction optique disponible sur la voie d'imagerie informative I est alors égal à la puissance de la face arrière 3 additionnée de la puissance du premier élément de correction 8, soit :

P(Vision Informative I) = P(Face arrière 3) + P(Premier élément de correction 8).

Pour que le porteur amétrope n'ait pas sa correction visuelle modifiée, il est indispensable de positionner le deuxième élément de correction 9 entre l'insert optique 4 et le contenu informationnel I.

De ce fait, la puissance de la lentille 1 correspondant à la correction du porteur amétrope est la suivante :

P(Vision Environnement E) = P(Face avant 2) + P(Face arrière 3) + P(Premier élément de correction 8) – P(Deuxième élément de correction 9).

En valeur absolue, les puissances du premier élément de correction 8 et du deuxième élément de correction 9 sont identiques.

En d'autres termes,

$$\left|P(\text{Premier élément de correction 8})\right| = \left|- P(\text{Deuxième élément de correction 9})\right|.$$

On retrouve alors :

$$P(\text{Vision Environnement E}) = P(\text{Face avant 2}) + P(\text{Face arrière 3})$$

Le porteur amétrope bénéficie ainsi d'un confort visuel exceptionnel autant au niveau de l'environnement E qu'au niveau du contenu informationnel I.

Selon une variante, les éléments de correction sont des pastilles de correction.

Plus particulièrement, ces pastilles sont des lentilles de correction en forme de petits disques et de très faible épaisseur, de l'ordre de quelques dixième de millimètres.

Lesdites pastilles peuvent être de type GRIN ou diffractif. La pastille de type GRIN est une lentille de type barreau à gradient d'indice (GRaded INdex) offrant l'avantage d'être un composant simple, sans aberration chromatique, à maintien de polarisation, et permettant plus de flexibilité de conception, l'épaisseur d'une telle lentille étant constante. La pastille de type diffractive dite de Fresnel équivaut sensiblement à une multitude de lentilles réfractives conventionnelles. L'indice de réfraction des pastilles diffractives est identique dans toute la lentille, mais l'épaisseur de la lentille n'est pas constante.

Dans un exemple particulier, comme représenté sur la figure 2, une première pastille 10 est collée sur la face arrière 3 de la lentille et une deuxième pastille 11 est collée sur la face avant 2 de la lentille.

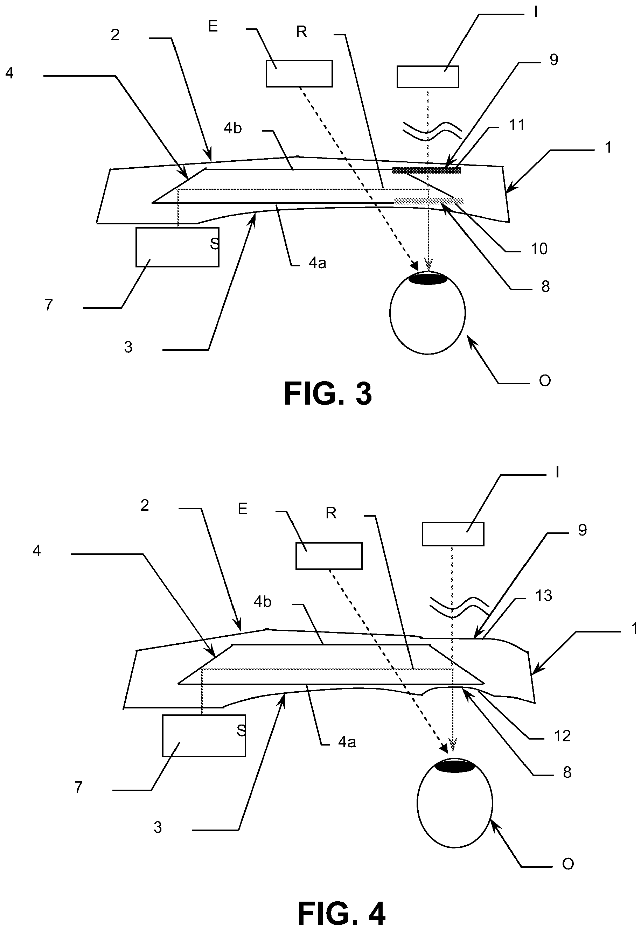

Dans un autre exemple particulier, comme représenté sur la figure 3, une première pastille 10 est collée sur la face 4a de l'insert optique, la face 4a étant directement à proximité de la face arrière 3 de la lentille, et une deuxième pastille 11 est collée partiellement sur la face 4b de l'insert optique 4, la face 4b étant directement à proximité de la face avant 2 de la lentille.

Les première et deuxième pastilles 10, 11 sont positionnées de sorte que leur diamètre utile permet de couvrir le champ de l'image générée par voie informative I.

Selon une autre variante et comme représenté sur la figure 4, les éléments de correction 8, 9 sont un premier usinage 12 sur la face arrière 3 et un deuxième usinage 13 sur la face avant 2 de la lentille.

Le premier usinage 12 garantit ainsi une vision confortable du porteur amétrope au niveau de la voie informative I.

Le deuxième usinage 13 garantit ainsi une vision confortable du porteur amétrope au niveau de l'environnement E.

Les faces avant et arrière 2,3 de la lentille sont donc modifiées localement afin de garantir une vision confortable du porteur amétrope de l'image informative I et de l'environnement E.

Pour cela, le premier usinage 12 et le deuxième usinage 13 sont réalisés dans le diamètre utile correspondant au champ angulaire de la vision informative I du porteur amétrope.

Ainsi, pour obtenir une gamme complète de correction, la présente invention propose l'utilisation d'éléments de correction 8, 9, 10, 11, 12, 13 pour visualiser le contenu informatif I sans fatigue.

Lorsque l'effort accomodatif EF0 calculé est supérieur à 2D, on a la formule suivante :

$$\left|\text{Effort Accomodatif EF0 calculé}\right| \geq P(\text{Premier élément de correction 8,10,12}) \geq \left|\text{Effort Accomodatif EF0 calculé}\right| - 2D$$

et

$$P(\text{Deuxième élément de correction 9,11,13}) = -P(\text{Premier élément de correction 8,10,12})$$

En d'autres termes,

-   P(Premier élément de correction 8,10,12) = | Effort Accomodatif EF0 calculé |, pour obtenir un effort accomodatif nul,

- P(Premier élément de correction 8,10,12) = | Effort Accomodatif EF0 calculé | - 2D, pour obtenir un effort accomodatif égal à 2D, et
- | Effort Accomodatif EF0 calculé | > P(Premier élément de correction 8,10,12) > | Effort Accomodatif EF0 calculé | - 2D, pour obtenir un effort accomodatif supérieur à 0 et inférieur à 2D.

Lorsque l'effort accomodatif EF0 calculé est inférieur ou égal à 2D, les premier et deuxième éléments de correction ne sont pas nécessaires, mais permettent d'optimiser la voie informative I pour garantir un confort de vision supplémentaire au porteur amétrope.

Lorsque l'effort accomodatif EF0 calculé est inférieur ou égal à 2D, on a la formule suivante :

$$\left| \text{Effort Accomodatif EF0 calculé} \right| \geq \text{P(Premier élément de correction } 8,10,12) \geq 0$$

et

$$\text{P(Deuxième élément de correction } 9,11,13) = -\text{P(Premier élément de correction } 8,10,12)$$

En d'autres termes,

- P(Premier élément de correction 8,10,12) = | Effort Accomodatif EF0 calcule |, pour obtenir un effort accomodatif nul,
- | Effort Accomodatif EF0 calculé | > P(Premier élément de correction 8,10,12) $\geq$ 0, pour obtenir un effort accomodatif supérieur à 0 et inférieur ou égal à 2D.

En considérant les résultats du tableau 7 pour les hypermétropes avec une face avant de puissance -0,25D, on remarque qu'il est possible d'obtenir une vision confortable, c'est-à-dire avec un effort accomodatif EF0 calculé inférieur ou égal à 2D, pour une puissance de lentille au maximum égale à +2,75D.

Pour pouvoir utiliser une lentille de puissance +4D, conformément à l'invention, en considérant que :

- le premier élément de correction 8 est une première pastille 10,
- le deuxième élément de correction 9 est une deuxième pastille 11, ladite première pastille 10 doit avoir une puissance de +1,25D pour obtenir un effort accomodatif égale à 2D. La deuxième pastille 11 a donc une puissance de -1,25D.

Si l'on souhait obtenir un effort accomodatif nul, une première pastille 10 de +3,25D est alors requise. La deuxième pastille 11 a donc une puissance de -3,25D.

Selon une autre variante de l'invention, l'élément de correction situé entre l'insert optique et l'oeil du porteur amétrope peut comprendre un élément augmentant la profondeur de champ dudit porteur.

Cet élément augmentant la profondeur de champ peut ainsi être combiné, par exemple, avec une première et une deuxième pastilles et/ou un premier et un deuxième usinages tels que décrits dans la présente invention et représentés sur les figures 2 à 4.

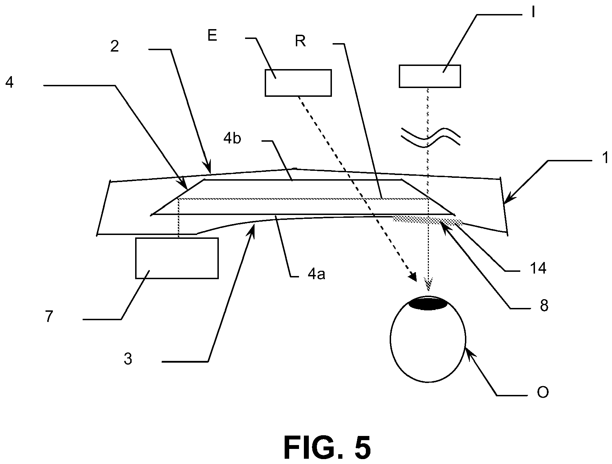

Dans un exemple particulièrement avantageux et comme représenté sur la figure 5, l'élément de correction 8 situé entre l'insert optique 4 et l'oeil O du porteur amétrope est cet élément 14 augmentant la profondeur de champ dudit porteur, la lentille 1 ne comprenant pas un autre élément de correction situé entre l'insert optique 4 et le contenu informationnel I.

Cet élément 14 augmentant la profondeur de champ peut être disposé, comme illustré sur la figure 5, sur la face arrière 3 de la lentille ou disposé (non représenté) au moins partiellement sur la face 4a de l'insert optique 4 directement à proximité de la face arrière 3 de la lentille.

La lentille 1 ainsi agencée permet au porteur amétrope d'avoir un effort accomodatif inférieur ou égal à 2D lors de la visualisation du contenu informationnel I, la vision ophtalmique étant, elle aussi, confortable.

La présente invention n'est pas limitée aux exemples de mode de réalisation qui viennent d'être décrits et porte dans sa généralité sur toutes les lentilles envisageables à partir des indications générales fournies dans l'exposé de l'invention.

Notamment, le premier et/ou le deuxième élément de correction peut être toutes les combinaisons possibles entre une pastille et/ou un usinage, plus particulièrement la combinaison d'au moins une pastille et d'un usinage ou de plusieurs pastilles.

Par ailleurs, tous les traitements effectués sur une lentille ophtalmique, par exemple traitement anti-reflet, anti-salissure ou teinte de type solaire par pigments, peuvent être effectués sans perturber la fonction de la voie informative.

**Revendications**

1. Lentille (1) de correction de la vue comportant une face avant (2) et une face arrière (3) et dans laquelle des faisceaux optiques, émis d'un système (7) de génération de faisceaux optiques, sont introduits par une surface d'entrée (5) et dirigés vers l'oeil (O) d'un porteur amétrope de ladite lentille pour permettre la visualisation d'un contenu informationnel (I), un insert optique (4) étant inclus dans la lentille (1), **caractérisée en ce que** ladite lentille (1) est agencée afin de permettre au porteur de ladite lentille d'avoir un effort accomodatif inférieur ou égal à 2D lors de la visualisation du contenu informationnel (I), l'effort accomodatif, en valeur absolue, étant calculé par la formule suivante :

$$\frac{1}{\text{Distance vision confort}} - \frac{1}{\text{Position image informative}}$$

la distance vision confort étant la distance de vision sans effort accomodatif, et la position image informative étant la position de l'image informative (I) dans l'espace visuel du porteur, une fois que l'image informative (I) a traversé la face arrière (3) de la lentille.

2. Lentille selon la revendication 1, destinée à un porteur myope, **caractérisée en ce qu'**elle est agencée de sorte que la puissance de la face avant (2) de la lentille est comprise entre 0D et +3D, le complément de la puissance nécessaire de la lentille pour corriger la vision dudit porteur étant sur la face arrière (3) de la lentille

3. Lentille selon la revendication 2, **caractérisée en ce que** la puissance de la face avant (2) de la lentille est égale à +1 D.

4. Lentille selon la revendication 1, destinée à un porteur hypermétrope, **caractérisée en ce qu'**elle est agencée de sorte que la puissance de la face arrière (3) de la lentille est comprise entre -1,25D et 0D, le complément de la puissance nécessaire de la lentille pour corriger la vision dudit porteur étant sur la face avant (2) de la lentille

5. Lentille selon la revendication 4, **caractérisée en ce que** la puissance de la face arrière (3) de la lentille est égale à -0,25D.

6. Lentille selon la revendication 1, **caractérisée en ce que** la lentille comprend au moins un élément de correction (8, 10, 12), situé entre l'insert optique (4) et l'oeil (O) du porteur.

7. Lentille selon la revendication 6, **caractérisée en ce que** l'élément de correction (8, 10, 12) comprend un élément augmentant la profondeur de champ.

8. Lentille selon la revendication 6 ou 7, **caractérisée en ce que** la lentille comprend :

   - un premier élément de correction (8, 10, 12), situé entre l'insert optique (4) et l'oeil (O) du porteur, et
   - un deuxième élément de correction (9, 11, 13), situé entre l'insert optique (4) et le contenu informationnel (I),

   la puissance dudit deuxième élément de correction étant égale à l'opposé de la puissance dudit premier élément de correction.

9. Lentille selon la revendication 8, **caractérisée en ce qu'**au moins un des éléments de correction (8, 9) comprend une pastille (10, 11).

10. Lentille selon la revendication 9, **caractérisée en ce qu'**au moins une pastille (10, 11) est de type diffractif.

11. Lentille selon la revendication 9 ou 10, **caractérisée en ce qu'**au moins une pastille (10,11) est de type GRIN.

**12.** Lentille selon l'une quelconque des revendications 9 à 11, **caractérisée en ce qu'**au moins une pastille (10,11) est disposée sur au moins l'une des deux faces (2,3) de la lentille.

**13.** Lentille selon l'une quelconque des revendications 9 à 12, **caractérisée en ce qu'**une première pastille (10) et une deuxième pastille (11) sont disposées respectivement sur la face arrière (3) et la face avant (2) de la lentille, la puissance de la deuxième pastille étant égale à l'opposé de la puissance de la première pastille.

**14.** Lentille selon l'une quelconque des revendications 9 à 13, **caractérisée en ce qu'**au moins une pastille (10,11) est disposée au moins partiellement sur au moins l'une des faces (4a,4b) planes et parallèles de l'insert optique (4).

**15.** Lentille selon l'une quelconque des revendications 9 à 14, **caractérisée en ce qu'**une première pastille (10) et une deuxième pastille (11) sont disposées au moins partiellement respectivement sur la face (4a) de l'insert optique (4) directement à proximité de la face arrière (3) de la lentille et sur la face (4b) de l'insert optique (4) directement à proximité de la face avant (2) de la lentille, la puissance de la deuxième pastille étant égale à l'opposé de la puissance de la première pastille.

**16.** Lentille selon l'une quelconque des revendications 8 à 15, **caractérisée en ce qu'**au moins un des éléments de correction (8,9) comprend un usinage (12,13) sur au moins l'une des deux faces (2,3) de la lentille.

**17.** Lentille selon la revendication 16, **caractérisée en ce qu'**un premier usinage (12) et un deuxième usinage (13) sont réalisés respectivement sur la face arrière (3) et la face avant (2) de la lentille, la puissance dudit deuxième usinage étant égale à l'opposé de la puissance dudit premier usinage.

**18.** Lentille selon l'une quelconque des revendications 1 à 17, **caractérisée en ce que** les éléments constitutifs dudit système (7) de générateur de faisceaux optiques sont relativement sensiblement fixes.


**Patentansprüche**

**1.** Linse (1) zur Sehkorrektur, umfassend eine Vorderfläche (2) und eine Rückfläche (3) und in der optische Strahlen, emittiert von einem System (7) zur Erzeugung optischer Strahlen, durch eine Eingangsfläche (5) eingeleitet und zum Auge (0) eines fehlsichtigen Trägers der Linse gerichtet werden, um die Visualisierung eines Informationsinhalts (I) zu ermöglichen, wobei ein optischer Einsatz (4) in der Linse (1) enthalten ist, **dadurch gekennzeichnet, dass** die Linse (1) so angeordnet ist, dass sie es dem Träger der Linse ermöglicht, beim Visualisieren des Informationsinhalts (I) eine Akkommodationsanstrengung aufzubringen, die weniger als oder gleich 2 D beträgt, wobei die Akkommodationsanstrengung als Absolutwert durch die folgende Formel berechnet wird:

$$\frac{1}{Komfort\text{--}Sehabstand} - \frac{1}{Position\ des\ Informationsbildes}$$

wobei der Komfort-Sehabstand der Sehabstand ohne Akkommodationsanstrengung ist und die Position des Informationsbildes die Position des Informationsbildes (I) im Sehraum des Trägers ist, sobald das Informationsbild (I) die Rückfläche (3) der Linse durchquert hat.

**2.** Linse nach Anspruch 1, vorgesehen für einen kurzsichtigen Träger, **dadurch gekennzeichnet, dass** sie so angeordnet ist, dass die Brechkraft der Vorderfläche (2) der Linse zwischen 0 D und +3 D liegt, wobei die notwendige Ergänzung der Brechkraft der Linse zur Sehkorrektur des Trägers sich an der Rückfläche (3) der Linse befindet.

**3.** Linse nach Anspruch 2, **dadurch gekennzeichnet, dass** die Brechkraft der Vorderfläche (2) der Linse gleich +1 D ist.

**4.** Linse nach Anspruch 1, vorgesehen für einen weitsichtigen Träger, **dadurch gekennzeichnet, dass** sie so angeordnet ist, dass die Brechkraft der Rückfläche (3) der Linse zwischen -1,25 D und 0 D liegt, wobei die notwendige Ergänzung der Brechkraft der Linse zur Sehkorrektur des Trägers sich an der Vorderfläche (2) der Linse befindet.

**5.** Linse nach Anspruch 4, **dadurch gekennzeichnet, dass** die Brechkraft der Rückfläche (3) der Linse gleich -0,25 D ist.

**6.** Linse nach Anspruch 1, **dadurch gekennzeichnet, dass** die Linse mindestens ein Korrekturelement (8, 10, 12) umfasst, das sich zwischen dem optischen Einsatz (4) und dem Auge (0) des Trägers befindet.

**7.** Linse nach Anspruch 6, **dadurch gekennzeichnet, dass** das Korrekturelement (8, 10, 12) ein Element umfasst, das die Tiefenschärfe erhöht.

**8.** Linse nach Anspruch 6 oder 7, **dadurch gekennzeichnet, dass** die Linse Folgendes umfasst:

- ein erstes Korrekturelement (8, 10, 12), befindlich zwischen dem optischen Einsatz (4) und dem Auge (0) des Trägers, und
- ein zweites Korrekturelement (9, 11, 13), befindlich zwischen dem optischen Einsatz (4) und dem Informationsinhalt (I),

wobei die Brechkraft des zweiten Korrekturelements gleich dem Gegenteil der Brechkraft des ersten Korrekturelements ist.

**9.** Linse nach Anspruch 8, **dadurch gekennzeichnet, dass** wenigstens ein Korrekturelement (8, 9) einen Chip (10, 11) umfasst.

**10.** Linse nach Anspruch 9, **dadurch gekennzeichnet, dass** mindestens ein Chip (10, 11) vom beugenden Typ ist.

**11.** Linse nach Anspruch 9 oder 10, **dadurch gekennzeichnet, dass** mindestens ein Chip (10, 11) vom Typ GRIN ist.

**12.** Linse nach einem der Ansprüche 9 bis 11, **dadurch gekennzeichnet, dass** mindestens ein Chip (10, 11) auf mindestens einer der beiden Flächen (2, 3) der Linse angeordnet ist.

**13.** Linse nach einem der Ansprüche 9 bis 12, **dadurch gekennzeichnet, dass** ein erster Chip (10) und ein zweiter Chip (11) jeweils auf der Rückfläche (3) und der Vorderfläche (2) der Linse angeordnet sind, wobei die Brechkraft des zweiten Chips gleich dem Gegenteil der Brechkraft des ersten Chips ist.

**14.** Linse nach einem der Ansprüche 9 bis 13, **dadurch gekennzeichnet, dass** mindestens ein Chip (10, 11) mindestens teilweise auf mindestens einer der planen und parallelen Flächen (4a, 4b) des optischen Einsatzes (4) angeordnet ist.

**15.** Linse nach einem der Ansprüche 9 bis 14, **dadurch gekennzeichnet, dass** ein erster Chip (10) und ein zweiter Chip (11) mindestens teilweise jeweils auf der Fläche (4a) des optischen Einsatzes (4) direkt in der Nähe der Rückfläche (3) der Linse und auf der Fläche (4b) des optischen Einsatzes (4) direkt in der Nähe der Vorderfläche (2) der Linse angeordnet sind, wobei die Brechkraft des zweiten Chips gleich dem Gegenteil der Brechkraft des ersten Chips ist.

**16.** Linse nach einem der Ansprüche 8 bis 15, **dadurch gekennzeichnet, dass** mindestens eines der Korrekturelemente (8, 9) eine Bearbeitung (12, 13) auf mindestens einer der beiden Flächen (2, 3) der Linse umfasst.

**17.** Linse nach Anspruch 16, **dadurch gekennzeichnet, dass** eine erste Bearbeitung (12) und eine zweite Bearbeitung (13) jeweils auf der Rückfläche (3) und der Vorderfläche (2) der Linse realisiert sind, wobei die Brechkraft der zweiten Bearbeitung gleich dem Gegenteil der Brechkraft der ersten Bearbeitung ist.

**18.** Linse nach einem der Ansprüche 1 bis 17, **dadurch gekennzeichnet, dass** die Bestandteile des Systems (7) zur Erzeugung der optischen Strahlen relativ deutlich fest sind.

**Claims**

**1.** Lens (1) of vision correction including a front face (2) and a back face (3) and in which lens optical beams, emitted by a system (7) for generating optical beams, are introduced via an entrance surface (5) and directed toward the eye (O) of an ametropic wearer of said lens in order to allow an informational content (I) to be viewed, an optical insert (4) being included in the lens (1), **characterized in that** said lens (1) is arranged in order to allow the wearer of said lens to make an accommodative effort smaller than or equal to 2D during the viewing of the informational content (I), the accommodative effort, in absolute value, being calculated by the following formula:

$$\frac{1}{\textit{Comfortable vision distance}} - \frac{1}{\textit{Informative image position}}$$

the comfortable vision distance being the vision distance without accommodative effort, and the informative image position being the position of the informative image (I) in the visual space of the wearer, once the informative image (I) has passed through the back face (3) of the lens.

2. Lens according to Claim 1, intended for a myopic wearer, **characterized in that** it is arranged so that the power of the front face (2) of the lens is comprised between 0D and +3D, the complement of the power required by the lens to correct the vision of said wearer being on the back face (3) of the lens.

3. Lens according to Claim 2, **characterized in that** the power of the front face (2) of the lens is equal to +1D.

4. Lens according to Claim 1, intended for a hypermetropic wearer, **characterized in that** it is arranged so that the power of the back face (3) of the lens is comprised between -1.25D and 0D, the complement of the power required by the lens to correct the vision of said wearer being on the front face (2) of the lens.

5. Lens according to Claim 4, **characterized in that** the power of the back face (3) of the lens is equal to -0.25D.

6. Lens according to Claim 1, **characterized in that** the lens comprises at least one correcting element (8, 10, 12), located between the optical insert (4) and the eye (O) of the wearer.

7. Lens according to Claim 6, **characterized in that** the correcting element (8, 10, 12) comprises an element increasing depth of field.

8. Lens according to Claim 6 or 7, **characterized in that** the lens comprises:

   - a first correcting element (8, 10, 12), located between the optical insert (4) and the eye (O) of the wearer, and
   - a second correcting element (9, 11, 13), located between the optical insert (4) and the informational content (I),

   the power of said second correcting element being equal to the opposite of the power of said first correcting element.

9. Lens according to Claim 8, **characterized in that** at least one of the correcting elements (8, 9) comprises a patch (10, 11).

10. Lens according to Claim 9, **characterized in that** at least one patch (10, 11) is diffractive.

11. Lens according to Claim 9 or 10, **characterized in that** at least one patch (10, 11) is a GRIN patch.

12. Lens according to any one of Claims 9 to 11, **characterized in that** at least one patch (10, 11) is placed on at least one of the two faces (2, 3) of the lens.

13. Lens according to any one of Claims 9 to 12, **characterized in that** a first patch (10) and a second patch (11) are placed on the back face (3) and the front face (2) of the lens, respectively, the power of the second patch being equal to the opposite of the power of the first patch.

14. Lens according to any one of Claims 9 to 13, **characterized in that** at least one patch (10, 11) is at least partially placed on at least one of the planar and parallel faces (4a, 4b) of the optical insert (4).

15. Lens according to any one of Claims 9 to 14, **characterized in that** a first patch (10) and a second patch (11) are at least partially placed on the face (4a) of the optical insert (4) directly in proximity to the back face (3) of the lens and on the face (46) of the optical insert (4) directly in proximity to the front face (2) of the lens, respectively, the power of the second patch being equal to the opposite of the power of the first patch.

16. Lens according to any one of Claims 8 to 15, **characterized in that** at least one of the correcting elements (8, 9) comprises a machined feature (12, 13) on at least one of the two faces (2, 3) of the lens.

17. Lens according to Claim 16, **characterized in that** a first machined feature (12) and a second machined feature (13) are produced on the back face (3) and the front face (2) of the lens, respectively, the power of said second machined feature being equal to the opposite of the power of said first machined feature.

18. Lens according to any one of Claims 1 to 17, **characterized in that** the constituent elements of said system (7) for generating optical beams are relatively substantially fixed.

FIG. 1

FIG. 2

**FIG. 3**

**FIG. 4**

## FIG. 5

**EP 2 041 614 B1**

## RÉFÉRENCES CITÉES DANS LA DESCRIPTION

**Documents brevets cités dans la description**

- FR 2873212
- FR 2872586
- FR 2698454
- WO 0195027 A